# EUROPEAN PATENT APPLICATION

(11) **EP 4 560 674 A1**
(43) Date of publication of application: **28.05.2025**
(21) Application number: 23211145.0
(22) Date of filing: 21.11.2023
(51) Int. Cl.: H01H 9/52, H02B 1/56, H02B 11/167

(54) **SWITCHGEAR**

(71) Applicant: ABB SCHWEIZ AG, 5400 Baden (CH)
(72) Inventor: KOUDELKA, Frantisek, 664 57 Menín (CZ); BAIER, Oliver, 40489 Düsseldorf (DE); DOLEZAL, Lukas, 671 63 Lechovice (CZ); KOPP, Dalibor, 613 00 Brno (CZ); MASMEIER, Philipp, 61231 Bad Nauheim (DE); NOVAK, Ondrej, 691 06 Velké Pavlovice (CZ); RIZZI, Corrado, 24040 Fornovo San Giovanni (BG) (IT); VRBKA, Pavel, 592 62 Nedvedice (CZ)
(74) Representative: Maiwald GmbH

(57) **Abstract**

The present invention relates to a switchgear (10) comprising a plurality of circuit breakers (20), a plurality of first coolers (30, 40) and at least one first air duct (60, 70), wherein each circuit breaker of the plurality of circuit breaker has an associated first cooler of the plurality of first coolers thermally connected to it and wherein the at least one first air duct is configured to direct air from the outside of the switchgear into the plurality of first coolers.

## Description

### FIELD OF THE INVENTION

The present invention relates to a switchgear, such as for medium voltage applications, as well as a method of cooling a switchgear.

### BACKGROUND OF THE INVENTION

Electric switchgears guide electrical currents and therefore generate ohmic losses, resulting in temperature rises. Standards set limits for the permitted temperature rise.

It is very important in medium voltage applications to provide cooling for circuit breakers, where heat is generated via Joule heating due to the passage of electric current.

Heat removal from inner parts of circuit breaker relies on heat conduction to coolers. Coolers can be attached on top, on the arms or other parts of the circuit breaker. Heat from the circuit breaker is conducted to these coolers and the coolers are then cooled by air that is the cooler than the cooler itself.

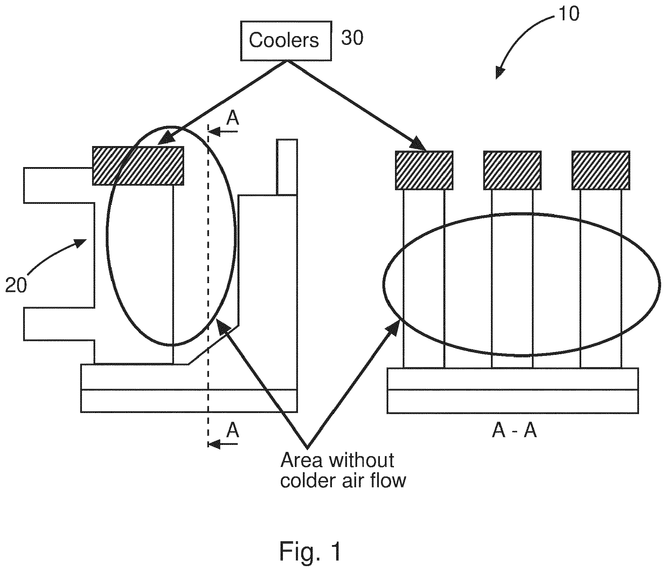

However, in current designs of the circuit breakers inside switchgears there is not enough space for cold air to flow. This situation is shown in Fig. 1 where areas without colder air flow are shown.

This situation can cause high temperatures inside circuit breaker, that even highly optimized coolers are unable to decrease.

There is a need to address this issue.

### SUMMARY OF THE INVENTION

Therefore, it would be advantageous to have an improved ability to extract thermal energy from switchgear circuit breakers.

The object of the present invention is solved with the subject matter of the independent claims, wherein further embodiments are incorporated in the dependent claims.

In a first aspect, there is provided a switchgear, comprising:
- a plurality of circuit breakers;
- a plurality of first coolers; and
- at least one first air duct.

Each circuit breaker of the plurality of circuit breaker has an associated first cooler of the plurality of first coolers thermally connected to it. The at least one first air duct is configured to direct air from the outside of the switchgear into the plurality of first coolers.

Thus, cool air from the outside of the switchgear of the switchgear is forced into a circuit breaker cooler that removes heat from the cooler and thereby increases the efficiency of cooling the circuit breaker.

In an example, the first coolers are heat sinks.

In an example, the switchgear comprising at least one second air duct, wherein the at least one second air duct is configured to direct air exiting the plurality of first coolers to the outside of the switchgear.

In this manner, the cool air brought into the switchgear to cool the cooler associated with the circuit breaker, and thus help cool the circuit breaker, is heated due to passage through the cooler and is extracted to the environment outside the switchgear to stop this hot air from heating other components inside the switchgear. Thus, energy is removed from the circuit breaker and from the inside of the switchgear as a whole due to the cool air, brought in from outside the switchgear, being heated in effect by circuit breaker and then this heated air is removed from within the switchgear.

In an example, the air exiting the plurality of first coolers comprises the air from the outside of the switchgear that was directed into the plurality of first coolers by the at least one first air duct.

In an example, the switchgear comprising a plurality of second coolers thermally connected to the plurality of circuit breakers. The switchgear also comprises at least one third air duct. Each circuit breaker of the plurality of circuit breaker has an associated second cooler of the plurality of second coolers thermally connected to it. The at least one third air duct is configured to direct air from the outside of the switchgear into the plurality of second coolers.

By having two coolers, that can be located towards ends of the circuit breaker, cooling of the circuit breaker can be improved. The cooling of the circuit breaker is further improved, because the coolers themselves are cooled to extract through directing air from outside the switchgear into the coolers.

In an example, the second coolers are heat sinks.

In an example, the switchgear comprises a plurality of air deflectors. The plurality of circuit breakers are orientated vertically, and the plurality of first coolers are located at an upper end of the plurality of circuit breakers, and the plurality of second coolers are located at a lower end of the plurality of circuit breakers. Each circuit breaker of the plurality of circuit breakers has an associated air deflector of the plurality of air deflectors. The air deflector associated with a circuit breaker is configured to deflect air exiting the second cooler associated with the circuit breaker around the first cooler associated with the circuit breaker.

It is to ne noted that an air deflector can itself be an air duct that deflects air by ducting it or be a different kind of air deflector.

In this manner, a cooler at the low end of the circuit breaker is cooled by having air from outside the switchgear forced into and through the cooler and this air is heated and then rises. This heated air is then directed around a cooler for the circuit breaker at the upper end of the circuit breaker to ensure that the upper cooler is not heated by the air that cooled the lower. Thus, the working efficiency of the upper cooler is not compromised. In this way, the overall cooling performance of the circuit breaker is improved.

In an example, the air deflector associated with the circuit breaker is configured to deflect air exiting the second cooler associated with the circuit breaker around either side of the first cooler associated with the circuit breaker.

In an example, each air deflector of the plurality of air deflectors comprises a V shape.

In an example, each air deflector of the plurality of air deflectors comprises an air duct.

Thus, an air deflector, or guide vane, can be a simple shape like a flat piece of metal bent in the middle to have a V cross section. It is then positioned below the upper cooler with the apex of the triangular cross section guide vane pointing downwards towards the lower cooler. The air that cools the lower cooler that is heated then rises and is diverted in two directions and through appropriate sizing and location of the guide vane, the hot air can be made to bypass the upper cooler and thus not lead to any heating of the upper cooler, which itself is cooled through having cool air from outside the switchgear forced through it.

However, an air deflector can be at least one air duct. Thus, an opening of the air duct can be below the upper cooler and above the lower cooler. The air that cools the lower cooler that is heated then rises and enters the air deflector in the form of an air duct that ducts/deflects the air around the upper cooler and thus not lead to any heating of the upper cooler, which itself is cooled through having cool air from outside the switchgear forced through it.

In an example, the plurality of second coolers are mounted to side surfaces of the plurality of circuit breakers.

In an example, the at least one second air duct is configured to direct air exiting the plurality of second coolers to the outside of the switchgear.

This ensures that heated air is fully extracted from the switchgear, providing for improved cooling of the circuit breakers and other components within the switchgear.

In an example, the air exiting the plurality of second coolers comprises the air from the outside of the switchgear that was directed into the plurality of second coolers by the at least one third air duct.

In an example, the plurality of first coolers are mounted to top surfaces of the plurality of circuit breakers.

In a second aspect, there is provided a method of cooling a switchgear. The switchgear comprises a plurality of circuit breakers, a plurality of first coolers, and at least one first air duct. Each circuit breaker of the plurality of circuit breaker has an associated first cooler of the plurality of first coolers thermally connected to it. The method comprises:
- directing, by the at least one first air duct, air from the outside of the switchgear into the plurality of first coolers.

In an example, the switchgear comprises at least one second air duct, and the method comprises:
- directing, by the at least one second air duct, air exiting the plurality of first coolers to the outside of the switchgear.

In an example, the method comprises:
- directing, by at least one second air duct, the air exiting the plurality of first coolers that comprises the air from the outside of the switchgear that was directed into the plurality of first coolers by the at least one first air duct.

In an example, the switchgear comprises a plurality of second coolers thermally connected to the plurality of circuit breakers. The switchgear also comprises and at least one third air duct. Each circuit breaker of the plurality of circuit breaker has an associated second cooler of the plurality of second coolers thermally connected to it. The method comprises:
- directing, by the at least one third air duct, air from the outside of the switchgear into the plurality of second coolers.

In an example, the switchgear comprises a plurality of air deflectors. The plurality of circuit breakers are orientated vertically. The plurality of first coolers are located at an upper end of the plurality of circuit breakers, and the plurality of second coolers are located at a lower end of the plurality of circuit breakers. Each circuit breaker of the plurality of circuit breakers has an associated air deflector of the plurality of air deflectors. The method comprises:
- deflecting, by an air deflector associated with a circuit breaker, air exiting the second cooler associated with the circuit breaker around the first cooler associated with the circuit breaker.

It is to ne noted that an air deflector can itself be an air duct that deflects air by ducting it or be a different kind of air deflector.

In an example, the method comprises:
- deflecting, by the air deflector associated with the circuit breaker, air exiting the second cooler associated with the circuit breaker around either side of the first cooler associated with the circuit breaker.

In an example, each air deflector of the plurality of air deflectors comprises a V shape.

In an example, each air deflector of the plurality of air deflectors comprises an air duct.

Thus, an air deflector, or guide vane, can be a simple shape like a flat piece of metal bent in the middle to have a V cross section. It is then positioned below the upper cooler with the apex of the triangular cross section guide vane pointing downwards towards the lower cooler. The air that cools the lower cooler that is heated then rises and is diverted in two directions and through appropriate sizing and location of the guide vane, the hot air can be made to bypass the upper cooler and thus not lead to any heating of the upper cooler, which itself is cooled through having cool air from outside the switchgear forced through it.

However, an air deflector can be at least one air duct. Thus, an opening of the air duct can be below the upper cooler and above the lower cooler. The air that cools the lower cooler that is heated then rises and enters the air deflector in the form of an air duct that ducts/deflects the air around the upper cooler and thus not lead to any heating of the upper cooler, which itself is cooled through having cool air from outside the switchgear forced through it.

In an example, the plurality of second coolers are mounted to side surfaces of the plurality of circuit breakers.

In an example, the method comprises:
- directing, by the at least one second air duct, air exiting the plurality of second coolers to the outside of the switchgear.

In an example, the method comprises:
- directing, by the at least one second air duct, the air exiting the plurality of second coolers to the outside of the switchgear and wherein the air exiting the plurality of second coolers comprises the air from the outside of the switchgear that was directed into the plurality of second coolers by the at least one third air duct.

In an example, the plurality of first coolers are mounted to top surfaces of the plurality of circuit breakers.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of the inside of a known switchgear with circuit breakers with coolers, where there are areas without colder air flow; and
Fig. 2 shows a schematic representation of an example of the new switchgear where air is directed into and out of the coolers of the circuit breakers.

### DETAILED DESCRIPTION OF EMBODIMENTS

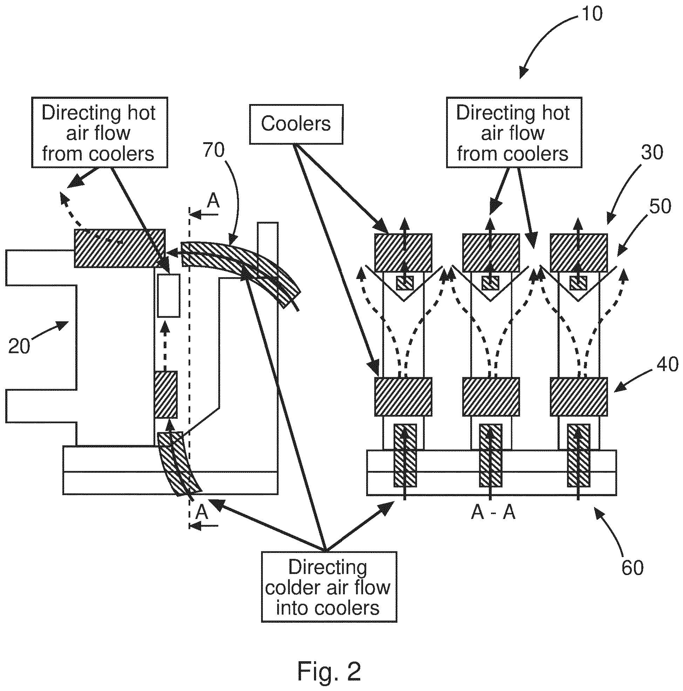

Fig. 2 relates to a new switchgear design with improved cooling of circuit breakers.

A exemplar switchgear 10 comprises:
- a plurality of circuit breakers 20;
- a plurality of first coolers 30, 40; and
- at least one first air duct 60, 70.

Each circuit breaker of the plurality of circuit breaker has an associated first cooler of the plurality of first coolers thermally connected to it. The at least one first air duct is configured to direct air from the outside of the switchgear into the plurality of first coolers.

Thus, cool air from the outside of the switchgear of the switchgear is forced into a circuit breaker cooler that removes heat from the cooler and thereby increases the efficiency of cooling the circuit breaker.

The first cooler can be located anywhere with respect to the circuit breaker: at the top, at the middle, at the bottom, on the side for example.

The circuit breakers and associated coolers are inside a compartment of the switchgear.

The air ducts lead to holes in the outer walls of the compartment of the switchgear and can have auto closing safety flaps at the compartment wall that close if the pressure in the compartment increases, for example due to a short circuit, thereby providing protection and maintaining hot gases and particulates from being expelled from the compartment.

In an example, the first coolers are heat sinks.

In an example, the switchgear comprises at least one second air duct, and the at least one second air duct is configured to direct air exiting the plurality of first coolers to the outside of the switchgear.

In this manner, the cool air brought into the switchgear to cool the cooler associated with the circuit breaker, and thus help cool the circuit breaker, is heated due to passage through the cooler and is extracted to the environment outside the switchgear to stop this hot air from heating other components inside the switchgear. Thus, energy is removed from the circuit breaker and from the inside of the switchgear as a whole due to the cool air, brought in from outside the switchgear, being heated in effect by circuit breaker and then this heated air is removed from within the switchgear.

In an example, the air exiting the plurality of first coolers comprises the air from the outside of the switchgear that was directed into the plurality of first coolers by the at least one first air duct.

In an example, the switchgear comprising a plurality of second coolers 30, 40 thermally connected to the plurality of circuit breakers. The switchgear also comprises at least one third air duct 60, 70. Each circuit breaker of the plurality of circuit breaker has an associated second cooler of the plurality of second coolers thermally connected to it. The at least one third air duct is configured to direct air from the outside of the switchgear into the plurality of second coolers.

By having two coolers, that can be located towards ends of the circuit breaker, cooling of the circuit breaker can be improved. The cooling of the circuit breaker is further improved, because the coolers themselves are cooled to extract through directing air from outside the switchgear into the coolers.

In an example, the second coolers are heat sinks.

In an example, the switchgear comprises a plurality of air deflectors 50. The plurality of circuit breakers are orientated vertically, and the plurality of first coolers are located at an upper end of the plurality of circuit breakers, and the plurality of second coolers are located at a lower end of the plurality of circuit breakers. Each circuit breaker of the plurality of circuit breakers has an associated air deflector of the plurality of air deflectors. The air deflector associated with a circuit breaker is configured to deflect air exiting the second cooler associated with the circuit breaker around the first cooler associated with the circuit breaker.

It is to ne noted that an air deflector can itself be an air duct that deflects air by ducting it or be a different kind of air deflector.

In this manner, a cooler at the low end of the circuit breaker is cooled by having air from outside the switchgear forced into and through the cooler and this air is heated and then rises. This heated air is then directed around a cooler for the circuit breaker at the upper end of the circuit breaker to ensure that the upper cooler is not heated by the air that cooled the lower. Thus, the working efficiency of the upper cooler is not compromised. In this way, the overall cooling performance of the circuit breaker is improved.

In an example, the air deflector associated with the circuit breaker is configured to deflect air exiting the second cooler associated with the circuit breaker around either side of the first cooler associated with the circuit breaker.

In an example, each air deflector of the plurality of air deflectors comprises a V shape.

In an example, each air deflector of the plurality of air deflectors comprises an air duct.

Thus, an air deflector, or guide vane, can be a simple shape like a flat piece of metal bent in the middle to have a V cross section. It is then positioned below the upper cooler with the apex of the triangular cross section guide vane pointing downwards towards the lower cooler. The air that cools the lower cooler that is heated then rises and is diverted in two directions and through appropriate sizing and location of the guide vane, the hot air can be made to bypass the upper cooler and thus not lead to any heating of the upper cooler, which itself is cooled through having cool air from outside the switchgear forced through it.

However, an air deflector can be at least one air duct. Thus, an opening of the air duct can be below the upper cooler and above the lower cooler. The air that cools the lower cooler that is heated then rises and enters the air deflector in the form of an air duct that ducts/deflects the air around the upper cooler and thus not lead to any heating of the upper cooler, which itself is cooled through having cool air from outside the switchgear forced through it.

In an example, the plurality of second coolers are mounted to side surfaces of the plurality of circuit breakers.

In an example, the at least one second air duct is configured to direct air exiting the plurality of second coolers to the outside of the switchgear.

This ensures that heated air is fully extracted from the switchgear, providing for improved cooling of the circuit breakers and other components within the switchgear.

In an example, the air exiting the plurality of second coolers comprises the air from the outside of the switchgear that was directed into the plurality of second coolers by the at least one third air duct.

In an example, the plurality of first coolers are mounted to top surfaces of the plurality of circuit breakers.

An exemplary method of cooling a switchgear 10 is now described. The switchgear comprises a plurality of circuit breakers 20, a plurality of first coolers 30, 40, and at least one first air duct 60, 70. Each circuit breaker of the plurality of circuit breaker has an associated first cooler of the plurality of first coolers thermally connected to it. The method comprises:
- directing, by the at least one first air duct, air from the outside of the switchgear into the plurality of first coolers.

In an example, the switchgear comprises at least one second air duct, and the method comprises:
- directing, by the at least one second air duct, air exiting the plurality of first coolers to the outside of the switchgear.

In an example, the method comprises:
- directing, by at least one second air duct, the air exiting the plurality of first coolers that comprises the air from the outside of the switchgear that was directed into the plurality of first coolers by the at least one first air duct.

In an example, the switchgear comprises a plurality of second coolers 30, 40 thermally connected to the plurality of circuit breakers. The switchgear also comprises at least one third air duct 60, 70. Each circuit breaker of the plurality of circuit breaker has an associated second cooler of the plurality of second coolers thermally connected to it. The method comprises:
- directing, by the at least one third air duct, air from the outside of the switchgear into the plurality of second coolers.

In an example, the switchgear comprises a plurality of air deflectors. The plurality of circuit breakers are orientated vertically. The plurality of first coolers are located at an upper end of the plurality of circuit breakers, and the plurality of second coolers are located at a lower end of the plurality of circuit breakers. Each circuit breaker of the plurality of circuit breakers has an associated air deflector of the plurality of air deflectors. The method comprises:
- deflecting, by an air deflector associated with a circuit breaker, air exiting the second cooler associated with the circuit breaker around the first cooler associated with the circuit breaker.

It is to ne noted that an air deflector can itself be an air duct that deflects air by ducting it or be a different kind of air deflector.

In an example, the method comprises:
- deflecting, by the air deflector associated with the circuit breaker, air exiting the second cooler associated with the circuit breaker around either side of the first cooler associated with the circuit breaker.

In an example, each air deflector of the plurality of air deflectors comprises a V shape.

In an example, each air deflector of the plurality of air deflectors comprises an air duct.

In an example, the plurality of second coolers are mounted to side surfaces of the plurality of circuit breakers.

In an example, the method comprises:
- directing, by the at least one second air duct, air exiting the plurality of second coolers to the outside of the switchgear.

In an example, the method comprises:
- directing, by the at least one second air duct, the air exiting the plurality of second coolers to the outside of the switchgear and wherein the air exiting the plurality of second coolers comprises the air from the outside of the switchgear that was directed into the plurality of second coolers by the at least one third air duct.

In an example, the plurality of first coolers are mounted to top surfaces of the plurality of circuit breakers.

The new development described above provide a significant improvement in air flow to the coolers of the circuit breaker inside the switchgear and thus improves the removal of heat from the circuit breaker compartment.

Thus, in summary the new development relate to improved cooling of circuit breakers inside the medium voltage switchgear applications.

This involves using airducts to force air into the circuit breaker cooler. This leads to:
An increase in the volume of colder air flow through the circuit breaker. This makes it possible to remove higher levels of heat from the circuit breaker. Air ducts provide for a better direction of air flow through the circuit breaker and coolers. Directing the colder air flow into the coolers and hot air flow from the coolers for each cooler separately provides for improved and more effective cooling.

### Reference Numerals

10 Switchgear
20 Circuit breakers
30 Coolers
40 Coolers
50 Air deflectors / Air ducts
60 Air duct(s)
70 Air duct(s)

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A switchgear (10), comprising:
- a plurality of circuit breakers (20);
- a plurality of first coolers (30, 40); and
- at least one first air duct (60, 70);
wherein each circuit breaker of the plurality of circuit breaker has an associated first cooler of the plurality of first coolers thermally connected to it; and
wherein the at least one first air duct is configured to direct air from the outside of the switchgear into the plurality of first coolers.

2. Switchgear according to claim 1, the switchgear comprising at least one second air duct, wherein the at least one second air duct is configured to direct air exiting the plurality of first coolers to the outside of the switchgear.

3. Switchgear according to claim 2, wherein the air exiting the plurality of first coolers comprises the air from the outside of the switchgear that was directed into the plurality of first coolers by the at least one first air duct.

4. Switchgear according to any one or claims 1-3, the switchgear comprising a plurality of second coolers (30, 40) thermally connected to the plurality of circuit breakers, and at least one third air duct (60, 70), wherein each circuit breaker of the plurality of circuit breaker has an associated second cooler of the plurality of second coolers thermally connected to it, and wherein the at least one third air duct is configured to direct air from the outside of the switchgear into the plurality of second coolers.

5. Switchgear according to claim 4, the switchgear comprising a plurality of air deflectors (50), wherein the plurality of circuit breakers are orientated vertically, wherein the plurality of first coolers are located at an upper end of the plurality of circuit breakers, wherein the plurality of second coolers are located at a lower end of the plurality of circuit breakers, wherein each circuit breaker of the plurality of circuit breakers has an associated air deflector of the plurality of air deflectors, and wherein the air deflector associated with a circuit breaker is configured to deflect air exiting the second cooler associated with the circuit breaker around the first cooler associated with the circuit breaker.

6. Switchgear according to claim 5, wherein the air deflector associated with the circuit breaker is configured to deflect air exiting the second cooler associated with the circuit breaker around either side of the first cooler associated with the circuit breaker.

7. Switchgear according to any of claims 5-6, wherein each air deflector of the plurality of air deflectors comprises a V shape.

8. Switchgear according to any of claims 4-7, wherein the plurality of second coolers are mounted to side surfaces of the plurality of circuit breakers.

9. Switchgear according to any of claims 4-8, wherein the at least one second air duct is configured to direct air exiting the plurality of second coolers to the outside of the switchgear.

10. Switchgear according to claim 9, wherein the air exiting the plurality of second coolers comprises the air from the outside of the switchgear that was directed into the plurality of second coolers by the at least one third air duct.

11. Switchgear according to any of claims 1-10, wherein the plurality of first coolers are mounted to top surfaces of the plurality of circuit breakers.

12. A method of cooling a switchgear (10), the switchgear comprising a plurality of circuit breakers (20), a plurality of first coolers (30, 40), and at least one first air duct (60, 70), wherein each circuit breaker of the plurality of circuit breaker has an associated first cooler of the plurality of first coolers thermally connected to it; and wherein the method comprises:
- directing, by the at least one first air duct, air from the outside of the switchgear into the plurality of first coolers.

13. Method according to claim 12, wherein the switchgear comprises a plurality of second coolers (30, 40) thermally connected to the plurality of circuit breakers and at least one third air duct (60, 70), wherein each circuit breaker of the plurality of circuit breaker has an associated second cooler of the plurality of second coolers thermally connected to it; and wherein the method comprises:
- directing, by the at least one third air duct, air from the outside of the switchgear into the plurality of second coolers.

14. Method according to claim 13, wherein the switchgear comprises a plurality of air deflectors, wherein the plurality of circuit breakers are orientated vertically, wherein the plurality of first coolers are located at an upper end of the plurality of circuit breakers, wherein the plurality of second coolers are located at a lower end of the plurality of circuit breakers, wherein each circuit breaker of the plurality of circuit breakers has an associated air deflector of the plurality of air deflectors; and wherein the method comprises:
- deflecting, by an air deflector associated with a circuit breaker, air exiting the second cooler associated with the circuit breaker around the first cooler associated with the circuit breaker.

15. Method according to claim 14, wherein the method comprises:
- deflecting, by the air deflector associated with the circuit breaker, air exiting the second cooler associated with the circuit breaker around either side of the first cooler associated with the circuit breaker.
